(19) Europäisches Patentamt / European Patent Office / Office européen des brevets

(11) **EP 4 257 306 A1**

(12) **EUROPEAN PATENT APPLICATION**

(43) Date of publication:
**11.10.2023 Bulletin 2023/41**

(21) Application number: **22166758.7**

(22) Date of filing: **05.04.2022**

(51) International Patent Classification (IPC):
**B26B 19/38** (2006.01)    **B26B 21/40** (2006.01)
**A45D 26/00** (2006.01)

(52) Cooperative Patent Classification (CPC):
**B26B 19/388; A45D 26/00; B26B 21/4056**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AG Eindhoven (NL)**

(72) Inventors:
• **VAN ZUTPHEN, Martijn**
 **Eindhoven (NL)**
• **KINGMA, Harmen Andries**
 **Eindhoven (NL)**
• **WUSIMAN, Zulukade**
 **Eindhoven (NL)**

(74) Representative: **Philips Intellectual Property &
Standards
High Tech Campus 52
5656 AG Eindhoven (NL)**

(54) **PROVIDING GUIDANCE TO A USER OF A PERSONAL CARE DEVICE**

(57) According to an aspect, there is provided a computer-implemented method (200) of providing guidance to a user of a personal care device (100), the method comprising: receiving (202), from a sensor (104) of the personal care device, motion data indicative of the motion of the personal care device over a period of time during a personal care activity; calculating (204), based on the motion data, a velocity at which the personal care device is moving during the period of time; comparing (206) the calculated velocity with a first defined velocity threshold; generating (208), based on the comparison, an instruction signal for delivery to a recipient device.

Fig. 4

**(Cont. next page)**

**Fig. 7**

**Description**

FIELD OF THE INVENTION

The invention relates to providing guidance to a user of a personal care device and, more particularly, to providing guidance based on the way in which the personal care device is moved.

BACKGROUND OF THE INVENTION

A user may perform a personal care activity using a personal care device. For example, a user may cut or trim their hair (e.g., hair on their head and/or facial hair) using a hair cutting device such as a hair trimmer, or perform a treatment (e.g., cleansing treatment) on their skin using a skin cleansing device or brush. Depending on the type of device, there may be an optimum speed at which the device should be moved over the part of the user's body that is being treated to achieve the desired outcome from the treatment.

If a user moves a personal care device too quickly during a personal care activity, then the personal care device may not be in position long enough to adequately perform its intended function. The user may need to repeat the personal care activity in a particular area in order to complete the treatment, and this could take longer than necessary, and could lead to irritation of the skin. On the other hand, if a user moves a personal care device too slowly during a personal care activity, then completing the personal care activity can take a long time, leading to unnecessary power usage and possible skin irritation. Research has shown that many users move personal care devices too quickly or too slowly during use.

It would, therefore, be useful to have a system that can provide guidance to a user regarding the speed at which a personal care device is moved during use.

SUMMARY OF THE INVENTION

Moving a personal care device (e.g., a shaving device) too quickly or too slowly during a personal care activity can have detrimental effects, as discussed above. The present invention seeks to provide guidance to a user of a personal care device so that the user is aware when a personal care activity is being performed too quickly or too slowly to achieve an optimum effect from the treatment. The inventors have recognised that a maximum velocity threshold can be established for a particular personal care device, which represents the maximum velocity at which the personal care activity can be performed optimally. A minimum velocity threshold can also be determined. The present disclosure provides a mechanism by which the velocity at which a personal care device is being moved during use can be determined, and guidance can be provided to a user of the device based on a comparison of the determined velocity with one or more thresholds.

According to a first specific aspect, there is provided a computer-implemented method of providing guidance to a user of a personal care device, the method comprising receiving, from a sensor of the personal care device, motion data indicative of the motion of the personal care device over a period of time during a personal care activity; calculating, based on the motion data, a velocity at which the personal care device is moving during the period of time; comparing the calculated velocity with a first defined velocity threshold; generating, based on the comparison, an instruction signal for delivery to a recipient device.

In some embodiments, the motion data may include at least acceleration data indicative of an acceleration of the personal care device at a plurality of instances during the period of time. Calculating the velocity may comprise integrating the acceleration over the period of time. Calculating the velocity may further comprise applying one or more filters to at least one of: the received motion data and the calculated velocity.

In some embodiments, the first defined velocity threshold may comprise a velocity above which a probability of the personal care device performing its intended purpose to a defined quality level exceeds a defined probability threshold.

The first defined velocity threshold may be determined based on an effective treatment length of a treatment element of the personal care device, an average treatment amount per stroke of the personal care device, and a time between treatments performed by the treatment element.

The personal care device may, in some embodiments, comprise a hair cutting device having a cutting element. The first defined velocity threshold may be determined based on an effective cutting length of the cutting element of the personal care device, an average number of cuts per stroke of the cutting element, and a time between cuts made by the cutting element.

In some embodiments, responsive to determining that the calculated velocity exceeds the first defined velocity threshold, generating an instruction signal may comprise generating an instruction to notify the user that they are moving the personal care device too quickly.

Responsive to determining that the calculated velocity is below a second defined velocity threshold, generating an instruction signal may comprise generating an instruction signal comprising an instruction to generate an alert to notify the user that they are moving the personal care device too slowly.

The instruction signal may, in some embodiments, comprise a control instruction for controlling an operating parameter of the personal care device.

In some embodiments, the computer implemented method may further comprise storing an indication of the comparison in a storage device.

According to a second specific aspect, there is provided a personal care device comprising a sensor configured to measure motion data indicative of the motion of the personal care device over a period of time during use in a personal care activity; and a processor configured to perform a method according to any of the preceding claims.

In some embodiments, the sensor may comprise an inertial measurement unit, IMU, including at least an accelerometer component and a gyroscope component.

The personal care device may comprise a hair cutting device. The hair cutting device may further comprise a cutting element for cutting hair extending from skin of a user during a personal care activity. The defined velocity threshold may comprise a velocity above which a probability of cutting all hairs engaged by the cutting element exceeds a defined probability threshold.

According to third specific aspect, there is provided a system comprising a personal care device having a sensor configured to measure motion data indicative of the motion of the personal care device over a period of time during a personal care activity; a display unit; a memory unit; and a processor configured to calculate, based on the motion data, a velocity at which the personal care device is moving during the period of time; compare the calculated velocity with a defined velocity threshold; generate, based on the comparison, an instruction signal for delivery to the display unit to present an indication of the comparison; and deliver an indication of the comparison for storage in the memory unit.

According to a fourth specific aspect, there is provided a computer program product comprising a non-transitory computer-readable medium, the computer-readable medium having computer-readable code embodied therein, the computer-readable code being configured such that, on execution by a suitable computer or processor, the computer or processor is caused to perform the steps of the methods disclosed herein.

These and other aspects will be apparent from and elucidated with reference to the embodiment(s) described hereinafter.

BRIEF DESCRIPTION OF THE DRAWINGS

Exemplary embodiments will now be described, by way of example only, with reference to the following drawings, in which:

Fig. 1 is a schematic illustration of an example of a personal care device according to various embodiments;
Fig. 2 is a flowchart of an example of a method of providing guidance to a user of a personal care device according to various embodiments;
Fig. 3 is an illustration of an example of part of a cutting element of a personal care device;
Fig. 4 is a graph showing the probability of performing an optimum treatment as a function of the velocity at which a personal care device is moved;
Fig. 5 is an illustration of an example of guidance provided to a user according to various embodiments;
Fig. 6 is a schematic illustration of a further example of a personal care device according to various embodiments;
Fig. 7 is a schematic illustration of an example of a system according to various embodiments; and
Fig. 8 is a schematic illustration of an example of a processor in communication with a computer-readable medium.

DETAILED DESCRIPTION OF THE EMBODIMENTS

Embodiments disclosed herein provide a mechanism by which a user of a personal care device can be provided with guidance regarding the speed at which they are moving the personal care device during use. Sensors associated with the personal care device measure data that is used to determine the velocity at which the device is being moved, and the determined velocity can be compared to one or more thresholds to determine, for example, whether the device is being moved too slowly, too quickly, or at an appropriate velocity.

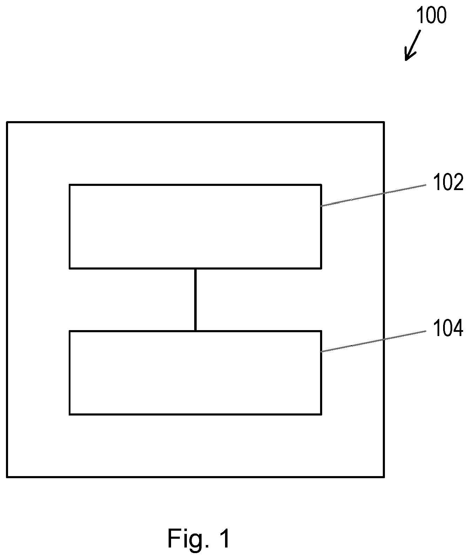

Referring to the drawings, Fig. 1 is a schematic illustration of an example of an apparatus 100. The apparatus 100 in this example is a personal care device. The personal care device 100 comprises a processor 102 and a sensor 104 in communication with the processor. The sensor 104 is configured to measure motion data indicative of the motion of the personal care device 100 over a period of time during use in a personal care activity. The processor 102 is a configured to receive the motion data measured by the sensor 104 for further processing, as discussed in greater detail herein. The sensor 104 may comprise any type of sensor capable of measuring motion data. In some embodiments, the sensor 104 may comprise or include an accelerometer configured to measure an acceleration experienced by the personal care device. For example, the sensor 104 may comprise a 3-axis accelerometer. In other examples, the sensor 104 may comprise an inertial measurement unit (IMU) which may include at least an accelerometer component and a gyroscope component. The accelerometer component may be configured to measure acceleration data and the gyroscope component may be configured to measure gyroscope data (e.g., angular velocity). In other embodiments, as discussed below, the processor 102 may be external to the personal care device 100. For example, processing of the data may be performed by a processor of a remote computing device, or by a server forming part of a cloud-computing environment.

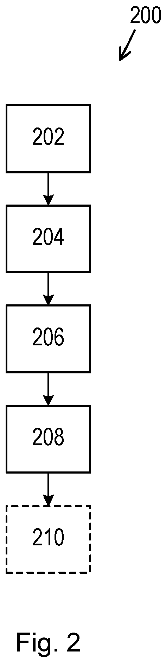

According to an aspect, a method is provided. Fig. 2 is a flowchart of an example of a method 200 for providing guidance to a user of a personal care device, such as the personal care device 100. The method 200 may comprise a computer-implemented method, such that the steps of the method may be performed using one or more processors, such as the processor 102, or one or more processors located external to the personal care device. The method 200 comprises, at step 202, receiving, from a sensor (e.g., the sensor 104) of the personal care device, motion data indicative of the motion of the personal care device over a period of time during a personal care activity. At step 204, the method 200 comprises calculating, based on the motion data, a velocity at which the personal care device 100 is moving during the period of time. The method 200 comprises, at step 206, comparing the calculated velocity with a first defined velocity threshold. At step 208, the method 200 comprises generating, based on the comparison, an instruction signal for delivery to a recipient device.

The motion data measured using the sensor 104 of the personal care device 100 may, in some embodiments, include at least acceleration data indicative of an acceleration of the personal care device as a plurality of instances during a period of time. Such acceleration data may, for example, be acquired using an accelerometer. In such examples, calculating the velocity may comprise integrating the acceleration over time (e.g., over the period of time that the motion data/acceleration data is measured by the sensor 104).

As well as measuring the acceleration experienced by the personal care device, accelerometers also measure the earth's gravitational field as a 1g static acceleration vector which points to the ground. This acceleration can represent a significant part of the accelerometer's measurement and, therefore, in some examples, the gravitational field may be taken into account to improve the accuracy of the measured data. In some examples, the gravitational acceleration may be filtered out to obtain a linear acceleration relating to the movement of the personal care device 100. The calculated linear acceleration can then be integrated over time (e.g., over the period of time that the acceleration data is measured by the sensor 104) to obtain an estimate of the speed/velocity at which the personal care device is being moved.

The real-time direction of gravity may be determined by fusing or combining accelerometer data with data acquired using one or more additional sensors, such as a gyroscope. In some embodiments, calculating the velocity (step 204) may further comprise applying one or more filters to at least one of: the received motion data and the calculated velocity. In some examples, the accelerometer data and the gyroscope data may be combined using known techniques, which may involve applying one or more filters to the data. In some examples, applying such techniques may lead to the calculation of the linear acceleration of the personal care device 100 on a sample-by-sample basis.

The resulting estimation is an accurate estimate of the speed/velocity of the personal care device, but it contains small estimation errors due to factors such as sensor noise. Therefore, an integration error is accumulated over time which causes the calculated speed value to drift away from the correct value. This error may be reduced or removed by applying a high-pass filter with a very low cut-off frequency (e.g., 0.4Hz) estimated speed.

Furthermore, a gyroscope sensor can be susceptible to measuring a small rotation speed along its axes even when the sensor is being held perfectly still. Such measurements are sometimes referred to as gyro drift or gyro bias and, in some examples, the small measurement may be removed before the gyroscope data is combined with the accelerometer data. Thus, a bias measurement and compensation may be performed on the data measured using the gyroscope sensor.

In step 206 of the method 200, the calculated velocity is compared with a first defined velocity threshold. The first defined velocity threshold may comprise a maximum intended velocity or a minimum intended velocity at which the personal care device 100 is moved to ensure an intended level of treatment is performed by the personal care device. For example, the first defined threshold may comprise a maximum intended velocity which represents a velocity above which the effectiveness of the treatment being performed by the personal care device 100 reduces. In other words, in some examples, the first defined velocity threshold may comprise a velocity above which a probability of the personal care device 100 performing its intended purpose to a defined quality level exceeds a defined probability threshold. For example, the first defined velocity threshold may comprise a velocity above which a probability of the personal care device 100 (e.g., a hair cutting device) performing its intended purpose to a defined quality level (e.g., cutting all hairs that it comes into contact with) exceeds a defined probability threshold (e.g., 80%, 90%, 99.9% or the like).

In another example, the first defined threshold may comprise a minimum intended velocity which represents a velocity below which use of the personal care device 100 results in wasted/unnecessary time and power usage. Below such a minimum intended velocity, the probability of the personal care device 100 performing its intended purpose to a defined quality level may be high (e.g., 100%), but the personal care activity may take an undesirably long time to complete.

The first defined velocity threshold with which the comparison of the personal care devices velocity is made may differ from device to device. For example, the maximum velocity at which a skin cleansing device can be effectively moved during a personal care activity may differ from the maximum velocity at which an epilator device may be effectively moved. In general, the first defined velocity threshold may be determined based on a combination of several parameters of the personal care device 100, including an effective treatment length of a treatment element of the personal care device, an average treatment amount per stroke of the personal care device, and a time between treatments performed by the treatment element. The treatment element of the personal care device 100 is the portion of the personal care device that performs the treatment (e.g., the portion of the personal care device that comes into contact with or treats the part of the user's body being treated). Thus, the effective treatment length of the treatment element is the length of the part of the treatment element that performs the treatment. For example, in a skin cleansing device, the effective treatment length may comprise the length of the part of the skin cleansing device that comes into contact with and cleanses the user's skin; in a hair cutting device having a blade, the effective treatment length may comprise the length of the blade that is able to cut the hair.

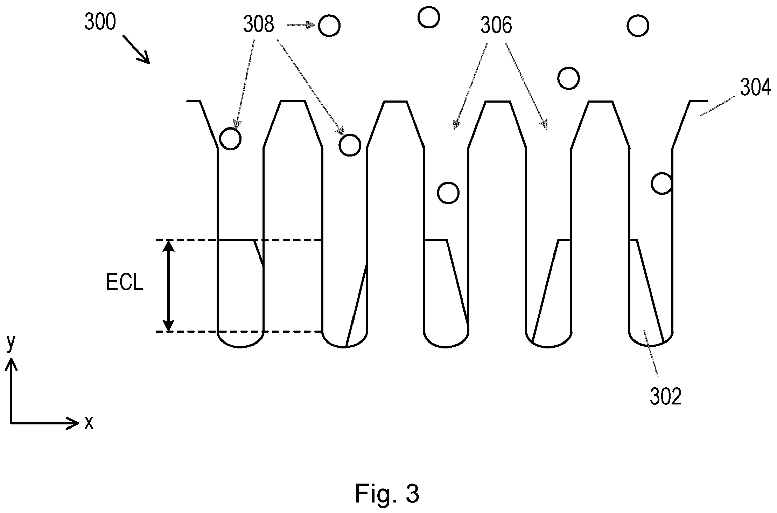

An example of how the first defined velocity threshold may be calculated is given below with reference to Fig. 3, which illustrates an example of part of a cutting element 300 of a hair cutting device. The cutting element 300 in this example includes blades 302 formed as teeth which move rapidly side to side (in the x-direction) relative to a guard 304. A plurality of slots 306 are formed in the guard 304, and the slots are configured to receive hairs 308 (shown from above in Fig. 3). When a hair 308 is beyond a certain position in one of the slots 306, the blade 302 will engage the hair as the blade moves from side to side, thereby cutting the hair. The length of the region within a slot where a hair can be cut if engaged by a blade 302 is referred to as the effective cutter length (ECL). More generally, for other personal care devices, this length may be referred to as the effective treatment length.

An average treatment amount per stroke of the personal care device can be calculated based on parameters of the treatment element of the personal care device. The average treatment amount per stroke represents an average amount of skin that is treated (or an average number of cuts in the case of a hair cutting device) each time one stroke of the personal care device is made.

In the example where the personal care device comprises a hair cutting device, an average number of cuts per stroke ($CPS_{cutter}$) for one tooth of the blade 302 (i.e., two edges of the blade) can be calculated by multiplying the number of guard slots/mm ($N_{guard}-1 / L_{guard}$) by a travel distance of the cutting element ($e_{drive}$) and the number of edges (i.e., 2):

$$CPS_{cutter} = \frac{N_{guard}-1}{L_{guard}} * 2 \cdot e_{drive} * 2 \qquad [1]$$

From the $CPS_{cutter}$, the number of cuts per stroke for a slot in the guard ($CPS_{slot}$) can be calculated by multiplying $CPS_{cutter}$ by the number of teeth ($N_{teeth}$) and dividing it by the number of guard slots ($N_{guard}$):

$$CPS_{slot} = \frac{N_{teeth}}{N_{guard}} * CPS_{cutter} \qquad [2]$$

A relative hair speed at which a hair will always be cut by the blade can then be calculated. When a hair travels through the ECL, it is assumed that it will always be cut if the time that the hair spends in the ECL is longer than the time of one stroke. In fact, the hair would be cut $CPS_{slot}$ times while in the slot for one stroke.

In an optimal case, cuts are equally divided over one stroke period and, in that case, the time between cuts $\Delta T_{cut}$ can be calculated by dividing the period of one stroke (i.e., 1 / (the target rotational speed (RPM)/60)) by the number of cuts per stroke for a slot ($CPS_{slot}$):

$$\Delta T_{cut} = \frac{\left(\frac{RPM}{60}\right)^{-1}}{CPS_{slot}} \qquad [3]$$

The maximum relative hair speed ($V_{hair,max}$) (i.e., the maximum relative speed between the cutting element and the hairs whereby all hairs are cut, which may be used as the first defined velocity threshold) can then be calculated by dividing the ECL by the time between cuts:

$$V_{hair,max} = \frac{ECL}{\Delta T_{cut}} \qquad\qquad [4]$$

When the relative hair speed is higher, for example when the personal care device is moved faster relative to the hair being cut, the probability that the hair will be cut ($P_{cut}$) decreases according to:

$$P_{cut} = \frac{\Delta T_{hair}}{\Delta T_{cut}} = \frac{ECL}{V_{hair}\,\Delta T_{cut}} \qquad\qquad [5]$$

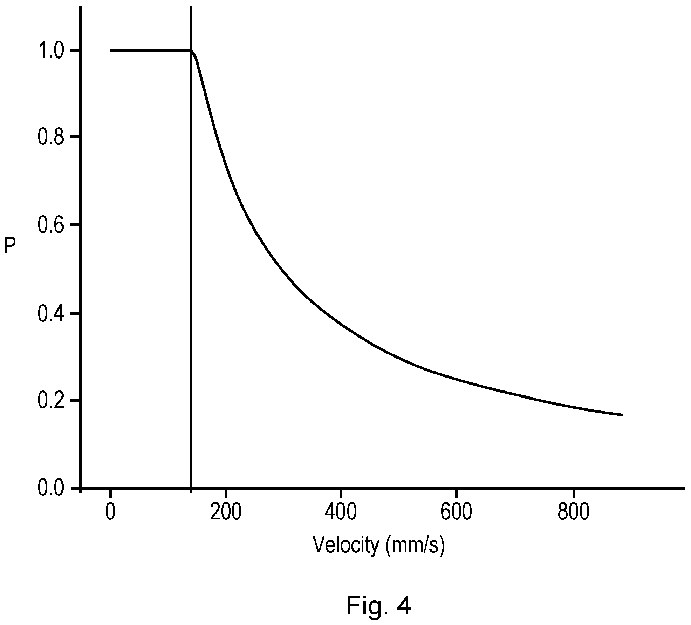

where $\Delta T_{hair}$ is the residence time of the hair in the ECL and $V_{hair}$ the relative hair speed. Fig. 4 is a graph showing how the probability that a hair will be cut, $P_{cut}$, varies as a function of velocity (e.g., the speed of the hair relative to the personal care device) for a particular example.

According to one example, a personal care device (i.e., hair cutting device) has the following parameters:

Effective cutter length, ECL = 0.55 mm
Target rotational speed, RPM = 6000
Number of slots in guard, $N_{guard}$ = 51
Number of teeth, $N_{cutter}$ = 28
Eccentricity, $e_{drive}$ = 0.85 mm
Length of guard with 50 slots, $L_{guard}$ = 30.4 mm

Applying these example parameters to equations [1] - [4] leads to an example maximum relative hair speed $V_{hair,max}$ = 169 mm/s.

Thus, in some examples, such as the example given above, the personal care device may comprise a hair cutting device having a cutting element. In such examples, the first defined velocity threshold may be determined based on an effective cutting length of the cutting element of the personal care device, an average number of cuts per stroke of the cutting element, and a time between cuts made by the cutting element.

At step 208 of the method 200, an instruction signal is generated for delivery to a recipient device, based on the comparison (step 206) of the calculated velocity of the personal care device (relative to the portion of the user being treated, such as the hair). In some examples, the instruction signal may comprise an instruction to generate an alert, notification or message to be presented to the user of the personal care device, for example via a display unit or display screen. In some examples, the notification may be presented on a display screen of an electronic device, such as a mobile phone, a tablet computer, a laptop computer, a wearable device, an interactive mirror, or the like. In other examples, the notification may be presented to a user in some other way, for example audibly via a speaker or via a haptic device. In some embodiments, the notification may be provided to the user by means of one or more lights or lighting effects presented on an electronic device or on the personal care device itself.

In some embodiments, responsive to determining that the calculated velocity meets or exceeds the first defined velocity threshold, the step of generating an instruction signal may comprise generating an instruction to notify the user that they are moving the personal care device too quickly.

In some examples, the calculated velocity may be compared with a second defined velocity threshold which may, for example, comprise a minimum intended velocity at which the personal care device should be moved. Responsive to determining that the calculated velocity is below a second defined velocity threshold, the step of generating an instruction signal may comprise generating an instruction signal comprising an instruction to generate an alert to notify the user that they are moving the personal care device too slowly.

Any notification provided to the user may be provided in the form of a textual message, a graphical notification (e.g., an image), an audible notification, a haptic notification, a combination of two or more of these forms of notification, or in some other form.

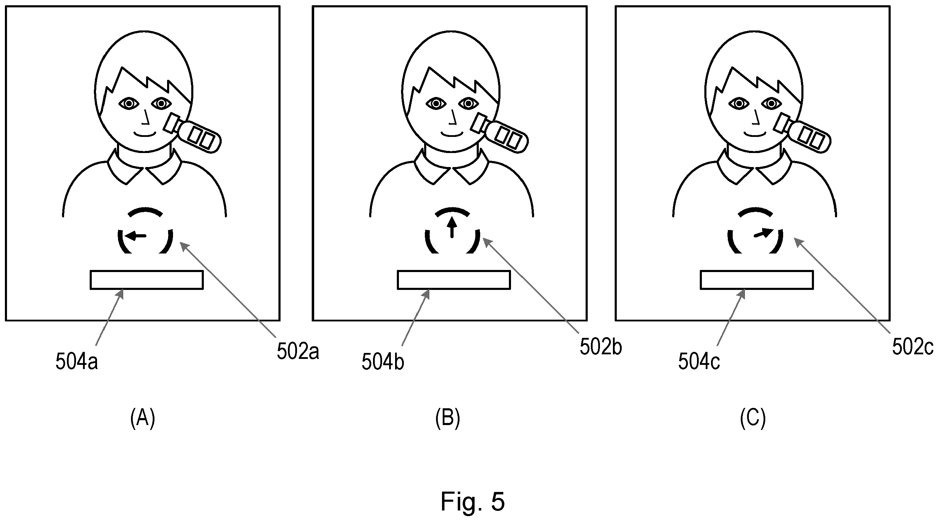

Fig. 5 is an illustration of three examples of how the user may be notified. In this example, the notification may be provided via the display screen of a device (e.g., a smart phone) associated with the user. In the example shown in Fig. 5A, the calculated velocity is below a minimum defined velocity threshold, and a notification is presented to the user to inform them that they are moving the personal care device too slowly. A graphical representation 502a includes an arrow pointing to a particular part of an image, to inform the user that they are moving the personal care device too slowly, and a message 504a indicates the same (e.g., "You can go a bit faster"). In the example shown in Fig. 5B, the calculated velocity is above the minimum defined velocity threshold and below a maximum defined velocity threshold, and a notification is presented to the user to inform them that they are moving the personal care device at an optimal speed (i.e., within an optimal speed range). A graphical representation 502b includes an arrow pointing to a particular part of an image, to inform the user that they are moving the personal care device at optimal speed, and a message 504b indicates the same (e.g., "Doing great"). In the example shown in Fig. 5C, the calculated velocity is above a maximum defined velocity threshold, and a notification is presented to the user to inform them that they are moving the personal care device too quickly. A graphical representation 502c includes an arrow pointing to a particular part of an image, to inform the user that they are moving the personal care device too quickly, and a message 504c indicates the same (e.g., "Take it easy").

In some embodiments, the instruction signal generated at step 208 may comprise a control instruction for controlling an operating parameter of the personal control device 100. For example, if it is determined that the calculated velocity exceeds the first defined velocity threshold (e.g., the personal care devices being moved too quickly), then an instruction signal may be generated that comprises an instruction to increase a cutting speed (e.g., the rpm) of the cutting element of a hair cutting device. In an example where the personal care device comprises a skin cleansing device, then the instruction signal may comprise an instruction to increase a speed of rotation of a cleansing brush of the device if it is determined that the devices being moved too quickly. In such examples, the operating parameter may be changed back to its previous setting if it is determined that the speed at which the personal care device is being moved is reduced to below the threshold.

Returning to Fig. 2, the method 200 may, in some examples, further comprise, at step 210, storing an indication of the comparison in a storage device. Each time a comparison is made, the comparison (and the calculated velocity) may be stored in a storage device (e.g., a memory) and used for further processing at a later time. In some examples, a summary of the velocity is at which the personal care device has been moved during one or more previous personal care activities may be presented to a user. In other examples, stored velocity data and/or stored comparison data may be used to determine trends in the velocity at which the personal care device is used during personal care activities performed by the user.

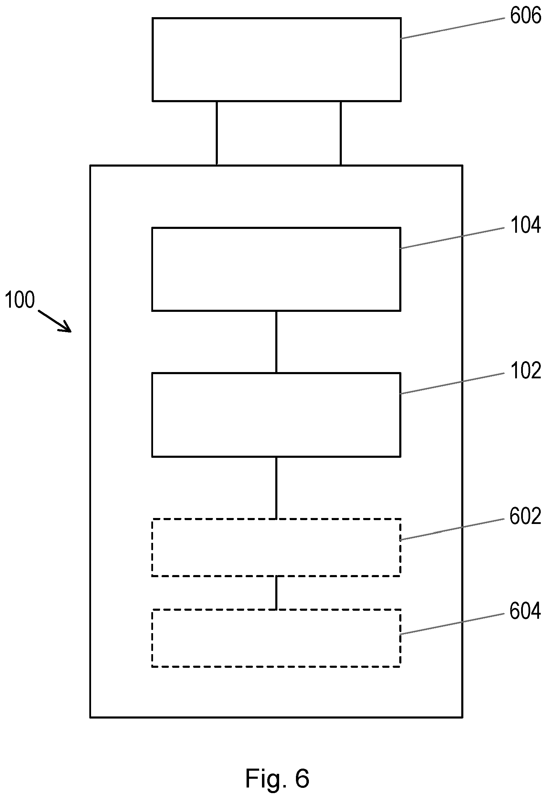

According to another aspect, a personal care device 100 is provided. Fig. 6 is a schematic illustration of a further example of a personal care device 100, which includes the processor 102 and the sensor 104. The processor 102 is configured to perform steps of the method 200 disclosed herein.

In some examples, the personal care device 100 may comprise a storage unit 602 for storing data, such as motion data measured using the sensor 104, the calculated velocity and/or the comparison performed at step 206. Data acquired using the sensor 104 and processed using the processor 102 may be transmitted to one or more other devices using wired or wireless communication. In some examples, the personal care device 100 may further comprise a communications unit 604 configured to communicate (e.g., transmitted and/or receive) data with one or more other devices.

As noted above, according to an example, the personal care device 100 may comprise a hair cutting device. The hair cutting device may further comprise a cutting element 606 for cutting hair extending from skin of a user during a personal care activity. In such examples, the defined velocity threshold may comprise a velocity above which a probability of cutting all hairs engaged by the cutting element exceeds a defined probability threshold.

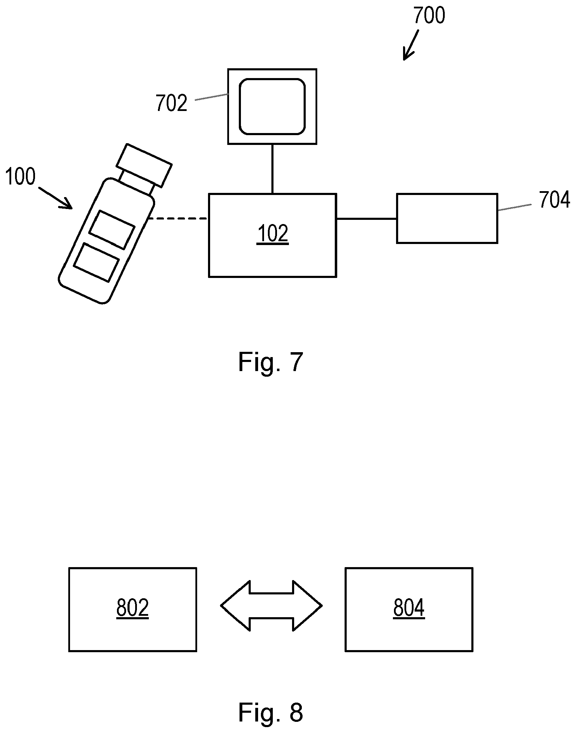

According to another aspect, a system is provided. Fig. 7 is a schematic illustration of an example of a system 700. The system 700 comprises the personal care device 100, the processor 102, a display unit 702 and a memory unit or storage unit 704. Each of the components of the system may be communicatively coupled to one another via a wired or wireless connection. The personal care device 100 comprises the sensor 104 configured to measure motion data indicative of a motion of the personal care device over a period of time during a personal care activity. The processor 102 is configured to calculate, based on the motion data, a velocity at which the personal care device is moving during the period of time; compare the calculated velocity with a defined velocity threshold; generate, based on the comparison, an instruction signal for delivery to the display unit 702 to present an indication of the comparison; and deliver an indication of the comparison for storage in the memory unit 704.

In some embodiments, the processor 102 may be located within the personal care device 100 while, in other examples, the processor 102 may be located remote from the personal care device, for example within a separate device that may also house the display unit 702 and/or the memory unit 704. In some examples, the processor 102, the display unit 702 and/or the memory unit 704 may be located within a computing device, such as a smartphone, for example.

According to another aspect, a computer program product is provided. Fig. 8 is a schematic illustration of an example of a processor 802 in communication with a computer-readable medium 804. According to an embodiment, a computer program product comprises a non-transitory computer-readable medium 804, the computer-readable medium having computer-readable code embodied therein, the computer-readable code being configured such that, on execution by a suitable computer or processor 802, the computer or processor is caused to perform the steps of method 200 disclosed herein.

Various embodiments disclosed herein provide a mechanism by which this a user of a personal care device can receive guidance, both in real time and following a personal care activity, relating to the speed at which the personal care device is moved during use. This by providing the user with guidance in this way, the user is able to operate the personal care device in an optimal manner (i.e., at an optimal speed), thereby reducing the likelihood that the personal care activity takes too long and also reducing the likelihood that the personal care activity is performed in an ineffective, resulting in the user repeating the activity, and potentially causing irritation to their skin.

The processor 102, 802 can comprise one or more processors, processing units, multicore processors or modules that are configured or programmed to control the components of the personal care device 100 in the manner described herein. In particular implementations, the processor 102, 802 can comprise a plurality of software and/or hardware modules that are each configured to perform, or are for performing, individual or multiple steps of the method described herein.

The term "module", as used herein is intended to include a hardware component, such as a processor or a component of a processor configured to perform a particular function, or a software component, such as a set of instruction data that has a particular function when executed by a processor.

It will be appreciated that the embodiments of the invention also apply to computer programs, particularly computer programs on or in a carrier, adapted to put the invention into practice. The program may be in the form of a source code, an object code, a code intermediate source and an object code such as in a partially compiled form, or in any other form suitable for use in the implementation of the method according to embodiments of the invention. It will also be appreciated that such a program may have many different architectural designs. For example, a program code implementing the functionality of the method or system according to the invention may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g., Java interpreter instructions). Alternatively, one or more or all of the sub-routines may be stored in at least one external library file and linked with a main program either statically or dynamically, e.g., at run-time. The main program contains at least one call to at least one of the sub-routines. The sub-routines may also comprise function calls to each other. An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. A computer-implemented method (200) of providing guidance to a user of a personal care device, the method comprising:

   receiving (202), from a sensor of the personal care device, motion data indicative of the motion of the personal care device over a period of time during a personal care activity;
   calculating (204), based on the motion data, a velocity at which the personal care device is moving during the period of time;
   comparing (206) the calculated velocity with a first defined velocity threshold;
   generating (208), based on the comparison, an instruction signal for delivery to a recipient device.

2. A computer-implemented method (200) according to claim 1, wherein the motion data includes at least acceleration data indicative of an acceleration of the personal care device at a plurality of instances during the period of time; and wherein calculating the velocity comprises integrating the acceleration over the period of time.

3. A computer-implemented method (200) according to claim 1 or claim 2, wherein calculating the velocity further comprises applying one or more filters to at least one of: the received motion data and the calculated velocity.

4. A computer-implemented method (200) according to any of the preceding claims, wherein the first defined velocity threshold comprises a velocity above which a probability of the personal care device performing its intended purpose to a defined quality level exceeds a defined probability threshold.

5. A computer-implemented method (200) according to any of the preceding claims, wherein the first defined velocity threshold is determined based on an effective treatment length of a treatment element of the personal care device, an average treatment amount per stroke of the personal care device, and a time between treatments performed by the treatment element.

6. A computer-implemented method (200) according to any of claims 1 to 4, wherein the personal care device comprises a hair cutting device having a cutting element; and
wherein the first defined velocity threshold is determined based on an effective cutting length of the cutting element of the personal care device, an average number of cuts per stroke of the cutting element, and a time between cuts made by the cutting element.

7. A computer-implemented method (200) according to any of the preceding claims, wherein, responsive to determining that the calculated velocity exceeds the first defined velocity threshold, generating an instruction signal comprises generating an instruction to notify the user that they are moving the personal care device too quickly.

8. A computer-implemented method (200) according to any of the preceding claims, wherein, responsive to determining that the calculated velocity is below a second defined velocity threshold, generating an instruction signal comprises generating an instruction signal comprising an instruction to generate an alert to notify the user that they are moving the personal care device too slowly.

9. A computer-implemented method (200) according to any of the preceding claims, wherein the instruction signal comprises a control instruction for controlling an operating parameter of the personal care device.

10. A computer-implemented method (200) according to any of the preceding claims, further comprising:
storing (210) an indication of the comparison in a storage device.

11. A personal care device (100) comprising:

a sensor (104) configured to measure motion data indicative of the motion of the personal care device over a period of time during use in a personal care activity; and
a processor (102) configured to perform a method according to any of the preceding claims.

12. A personal care device (100) according to claim 11, wherein the sensor comprises an inertial measurement unit, IMU, including at least an accelerometer component and a gyroscope component.

13. A personal care device (100) according to claim 11 or claim 12, wherein the personal care device comprises a hair cutting device, and wherein the hair cutting device further comprises:

a cutting element (606) for cutting hair extending from skin of a user during a personal care activity;
wherein the defined velocity threshold comprises a velocity above which a probability of cutting all hairs engaged by the cutting element exceeds a defined probability threshold.

14. A system (700) comprising:

a personal care device (100) having a sensor configured to measure motion data indicative of the motion of the personal care device over a period of time during a personal care activity;
a display unit (702);
a memory unit (704); and

a processor (102) configured to:

calculate, based on the motion data, a velocity at which the personal care device is moving during the period of time;
compare the calculated velocity with a defined velocity threshold;
generate, based on the comparison, an instruction signal for delivery to the display unit to present an indication of the comparison; and
deliver an indication of the comparison for storage in the memory unit.

15. A computer program product comprising a non-transitory computer-readable medium (804), the computer-readable medium having computer-readable code embodied therein, the computer-readable code being configured such that, on execution by a suitable computer or processor (802), the computer or processor is caused to perform the method of any of claims 1 to 10.

Fig. 1

200

202

204

206

208

210

Fig. 2

Fig. 3

Fig. 4

Fig. 5

EP 4 257 306 A1

Fig. 6

700

702

100

102

704

Fig. 7

802 ⟷ 804

Fig. 8

Europäisches
Patentamt
European
Patent Office
Office européen
des brevets

## EUROPEAN SEARCH REPORT

**Application Number**

EP 22 16 6758

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 974 126 A1 (KONINKLIJKE PHILIPS NV [NL]) 30 March 2022 (2022-03-30) * paragraphs [0024] – [0052]; figure 1 * | 1,2,4, 7-15 | INV. B26B19/38 B26B21/40 A45D26/00 |
| Y | | 3 | |
| A | | 5,6 | |
| Y | EP 3 546 150 A1 (BRAUN GMBH [DE]) 2 October 2019 (2019-10-02) * paragraphs [0111] – [0114]; figures 1-3 * | 3 | |
| X | EP 3 923 261 A1 (KONINKLIJKE PHILIPS NV [NL]) 15 December 2021 (2021-12-15) * paragraphs [0026] – [0041]; figures 1, 2 * | 1,4,8, 10-12, 14,15 | |
| A | DE 10 2005 045713 A1 (BRAUN GMBH [DE]) 29 March 2007 (2007-03-29) * paragraphs [0024] – [0031]; figures 1-3 * | 1-15 | |

**TECHNICAL FIELDS SEARCHED (IPC)**

B26B

The present search report has been drawn up for all claims

| Place of search | Date of completion of the search | Examiner |
|---|---|---|
| Munich | 5 September 2022 | Rattenberger, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 6758

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2022

| Patent document cited in search report | | Publication date | Patent family member(s) | | Publication date |
|---|---|---|---|---|---|
| EP 3974126 | A1 | 30-03-2022 | EP | 3974126 A1 | 30-03-2022 |
| | | | WO | 2022063628 A1 | 31-03-2022 |
| EP 3546150 | A1 | 02-10-2019 | CN | 110303526 A | 08-10-2019 |
| | | | EP | 3546150 A1 | 02-10-2019 |
| | | | JP | 2019171060 A | 10-10-2019 |
| | | | JP | 2022008085 A | 13-01-2022 |
| | | | US | 2019299437 A1 | 03-10-2019 |
| EP 3923261 | A1 | 15-12-2021 | EP | 3923261 A1 | 15-12-2021 |
| | | | WO | 2021249797 A1 | 16-12-2021 |
| DE 102005045713 | A1 | 29-03-2007 | AT | 455628 T | 15-02-2010 |
| | | | DE | 102005045713 A1 | 29-03-2007 |
| | | | EP | 1926574 A1 | 04-06-2008 |
| | | | JP | 5020958 B2 | 05-09-2012 |
| | | | JP | 2009508606 A | 05-03-2009 |
| | | | US | 2008196258 A1 | 21-08-2008 |
| | | | WO | 2007033729 A1 | 29-03-2007 |

EPO FORM P0459

For more details about this annex : see Official Journal of the European Patent Office, No. 12/82